# EUROPEAN PATENT SPECIFICATION

(11) **EP 1 635 551 B1**
(45) Date of publication and mention of the grant of the patent: **20.05.2009**
(21) Application number: 05291890.1
(22) Date of filing: 13.09.2005
(51) Int. Cl.: H04M 3/42, H04L 29/08, H04M 1/253

(54) **Voice mail system for peer to peer communication**
Sprachnachrichtensystem für Peer-to-peer-kommunikation
Système de messagerie vocale pour une communication point à point

(30) Priority: 13.09.2004 JP 2004265508
(43) Date of publication of application: 15.03.2006
(73) Proprietor: FRANCE TELECOM, 75015 Paris (FR)
(72) Inventor: Mio Haruo, Tokio (JP)

(56) References cited:
- WO-A-20/04057846
- US-A1- 2003 222 874

## Description

The invention relates to a voice mail system between terminal elements of a telecommunication network.

According to a conventional voice mail system, each terminal element of a conventional telecommunication network should have identifier like a telephone number or an address based on which a centralized control device like a switchboard or a call control server detects a specific terminal element of the communication partner to be connected for receiving a voice message that is recorded in the centralized storage unit.

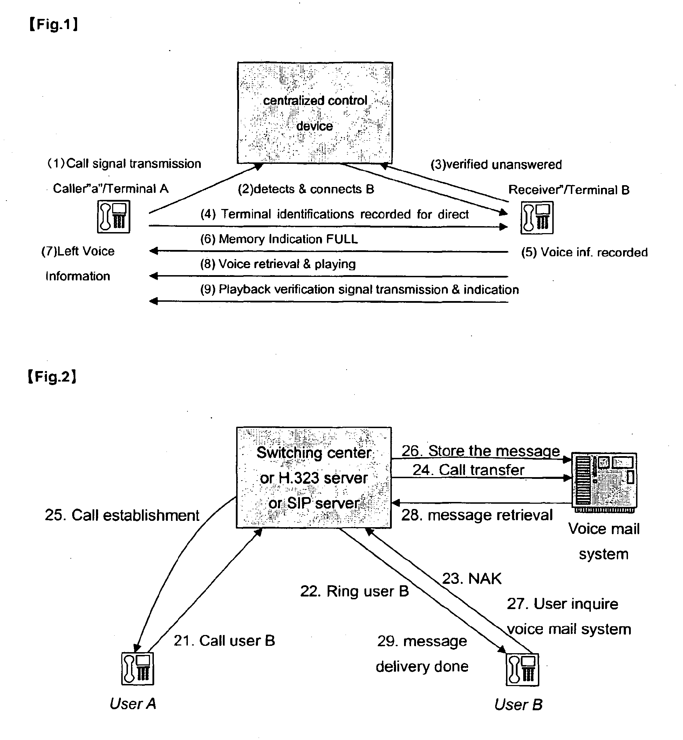

Conventionally in a telecommunication network, for example as shown in figure 2, when a user by terminal A calls a destination terminal B for transmission from terminal A, in a first step 21, a centralized control device comprising a call control H323 or SIP server or a switching center receives from the terminal A the call signal for dispatching to the terminal B. In a second step 22 of detecting & connecting the terminal B the centralized control device transmits the call signal for ring in terminal B. In a step 23 wherein the terminal B does not respond to the call signal within a certain predetermined time, the centralized control device recognizes the terminal B as not answering. In a step 24 triggered by terminal B recognized as not answering, the centralized control device establishes a connection to a centralized repository of a voice mail provided for storing any voice information. In a subsequent step 25 a communication route between terminal A and the voice mail system is set up. In a step 26 voice information from the terminal A is transmitted to be recorded by the voice mail system repository. Thereafter when in a step 27 the user by terminal B inquires of the centralized control device to be notified of recorded voice information for him, a message retrieval step 28 checks in the repository if recorded information for a receiver is associated with an indication of the terminal B for establishing a connection to the voice mail repository and inquiring the recorded voice information. When the voice information addressed to the terminal B is detected, the voice information is transmitted to the terminal B in a step 29 through the centralized control device and is played back in the terminal B indicated for receiving the voice information.

For delivery of message to an end user, the above described prior art needs always a centralized control device comprising a switching center or a server provided for controlling any communication within the communication network for detecting and connecting the specified terminals of communication partners, said centralized control device being associated with a centralized storage unit like the voice mail server for storing voice information of an originator. As communication capacity depends on the capacity of these centralized devices for processing resources, it may not work well under communication congestion.

In addition, as the receiving partner may exclusively require and handle the originator's voice information recorded to the centralized storage unit, it is difficult for the originator to confirm a voice information playback condition whether the recorded voice information certainly has been played back and/or when it was played back by receiving partner.

For the above case, an improved user friendliness voice mail system is known as disclosed by the Japanese patent application 2003-110742 as an example. According to the improved voice mail system, an originator's voice information is recorded and stored in the voice mail log domain of the RAM section which is built in to the IP telephone terminal controlled based on an Internet protocol (IP) address.

According to the voice mail system disclosed by the cited Japanese patent application, the problem of connection establishment under congested communication is not solved as the communication capacity depends on capacity of the centralized control device capacity by which specified communication terminals are detected, connected and controlled. In addition, it is not possible for an originator to confirm a voice information play back condition that is exactly when the recorded voice information certainly has been played back by the receiving partner.

Patent application WO2004/057846 also discloses a voice mail system wherein the voice mail functionality is provided locally at the terminal set. In this document a voice mail is recorded in the destination terminal or in a backup terminal that was formerly designated for this destination terminal. A voice mail indicator is generated so that the stored voice mail can later be retrieved and played to the person it is intended.

An object of the invention is to provide a voice mail system for permitting an originator to confirm the information of the voice information playback left by the originator and for reducing the burden of maintenance of the centralized control device of the telecommunication network.

An other object of the invention is to provide a method according to.

This is achieved with a communication terminal as claimed in claim 1, a telecommunication network as claimed in claims 2 and 3 and a voice mail method as claimed in claim 4.

The communication partner detecting/connecting means is a means for connecting directly between specified communications terminals without using a centralized control device based on a primary communication record connected once between specified terminals which have been recorded in a communication track record means for recording and storing all necessary information like a particular terminal telephone number or IP address for detecting and connecting the specified terminals of the call partners connected primarily via the centralized control device such as the switchboard and the call control server etc.

In the voice mail system, each terminal according to the invention has the information repository means, the recorded information indicating means, the information retrieval means and the retrieval completion signal transmission means by those of which a receiving partner acknowledges an existence of recorded information by an indication of the recorded information indicating means and then plays back the information left by an originator. When the play-back is completed, the recorded information playback completion signal is transmitted to the originator terminal simultaneously with the completion of recorded information playback indicated on the originator terminal. Therefore, the originator may confirm when the receiving partner has played back the voice message left by the originator.

As an effect of the voice mail system according to the invention, specified terminals are directly connected by referring the communication record provided by the communication track record means in which each primary communication record between specific terminals is stored. The communication partner may communicate with other partner without order from the centralized control device, arbiter.

Preferably, the telecommunication network according to the invention is autonomy decentralized peer to peer system network without using the conventional centralized control device by which specified communication terminals are detected, connected and controlled so that the communication capacity does not depend on the centralized control device capacity and so that the problem of connection establishment under congested communication is solved.

A preferred embodiment of the invention is explained with reference to the drawings wherein:
- Figure 1 is a schematic diagram of the voice mail system according to the invention;
- Figure 2 is a schematic diagram of the conventional voice mail system;
- Figure 3 shows main components of the voice mail system according to the invention;
- Figures 4 to 6 shows main steps of the method according to the invention.

The described embodiment particularly teaches a direct communication between terminals that are specified by a record of a primary communication connection establishment attempt.

As shown in figure 1, when an originator "a " primarily calls a terminal B from a terminal A of a telecommunication network, a call signal which calls the terminal B from the terminal A (1) accesses a switchboard or a call control server of a centralized control device, then (2) detects and establishes the connection with the terminal B and transmits the call signal.

When (3) the receiving partner "b" of the terminal B does not respond to the call signal during a predetermined period, the centralized control device recognizes as unanswered of the terminal B.

The centralized control device which verified unanswered of particular terminal B, (4) transmits the information of terminal A connection identification to be recorded into a communication track record means 12 of the terminal B and the information of the terminal B identification to be recorded into a communication track record means 12 of the terminal A so that a communication between the terminal A and terminal B thereafter may directly be connected without the centralized control device since each terminal knows destination information of each other.

After the terminal A is connected to the terminal B, the originator "a" of the terminal A transmits voice information that is (5) recorded into an information repository means 13 of the terminal B.

When memory capacity of the terminal B information repository means is filled up, the capacity "FULL" information is indicated in a recorded information indicating means 14 of terminal B and transmitted (6) to terminal A so that thereafter the voice message information addressed to terminal B is recorded to the information repository means of terminal A kept by originator "a".

When both information repository means of terminal A and terminal B have been filled up, both terminal A and terminal B may access to the centralized control device such as a call control server and the originator "a" may leave voice information into the conventional centralized storage unit of the voice mail server as in prior art.

When voice information recording is completed, the existence of the recorded information is indicated (7) by a recorded information indicating means of both terminal A and terminal B that the originator "a" left the voice information for the receiving partner "b".

When the receiving partner "b" recognizes the indication of the recorded information indicating means from the terminal B and confirm the existence of the voice information recorded in to the information repository means of terminal A and/or terminal B, an information retrieval means retrieves (8) the recorded voice information for terminal B from the information storage means of terminal A and/or terminal B to be played back.

When the voice information is retrieved and playback is completed on terminal B, the playback completion signal is transmitted (9) to the terminal A by the retrieval completion signal transmission means and the completion of playback verification is indicated by the retrieval confirmation displaying means in the terminal A of the originator" a ".

As it is explained in the above embodiment that each of the terminal A and the terminal B has each means, said means may be integrated as one means controlled by an integrated circuit.

The above integrated circuit may be controlled and operated by application software or firmware.

This invention is useful in industries for recording, retrieving and replaying voice information of each terminals of communication network.

As the communication network according to this invention comprises a so-called "Pia two Pia (P2P and Peer-to-Peer)" in which specified terminals are detected and connected without the conventional server, voice information is recorded and retrieved without the server so that the operation and maintenance cost of the network can be reduced. Furthermore, breakdowns of network can be reduced according to the invention.

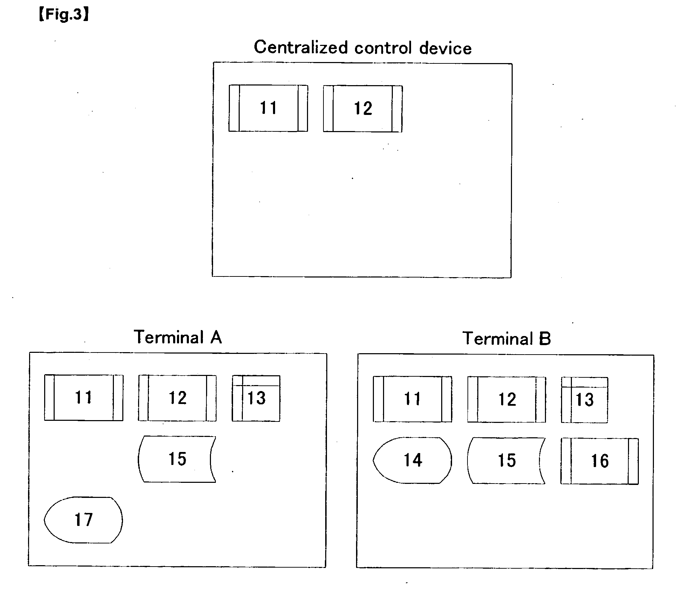

The voice mail system now described with reference to figure 3 comprises in a network a centralized control device and at least two terminals A and B. Both terminals A and B comprise:
- a communication partner detecting/connecting means 11 for detecting a communication partner terminal to be connected,
- a communication track record means 12 for establishing direct re-communication contact between the recorded terminals by first contact there between,
- an information repository means 13 for storing/recording a voice message, and
- an information retrieval means 15 for retrieving the stored voice message.

At least the terminal B comprises a recorded information indicating means 14 for displaying a presence of the stored information and a retrieval completion signal transmission means 16 for transmitting a indication signal of the retrieval completion.

At least the terminal A comprises a retrieval confirmation displaying means 17 for displaying a retrieval confirmation by receiving the retrieval completion signal.

The centralized control device comprises also a communication partner detecting/connecting means 11 and a communication track record means 12.

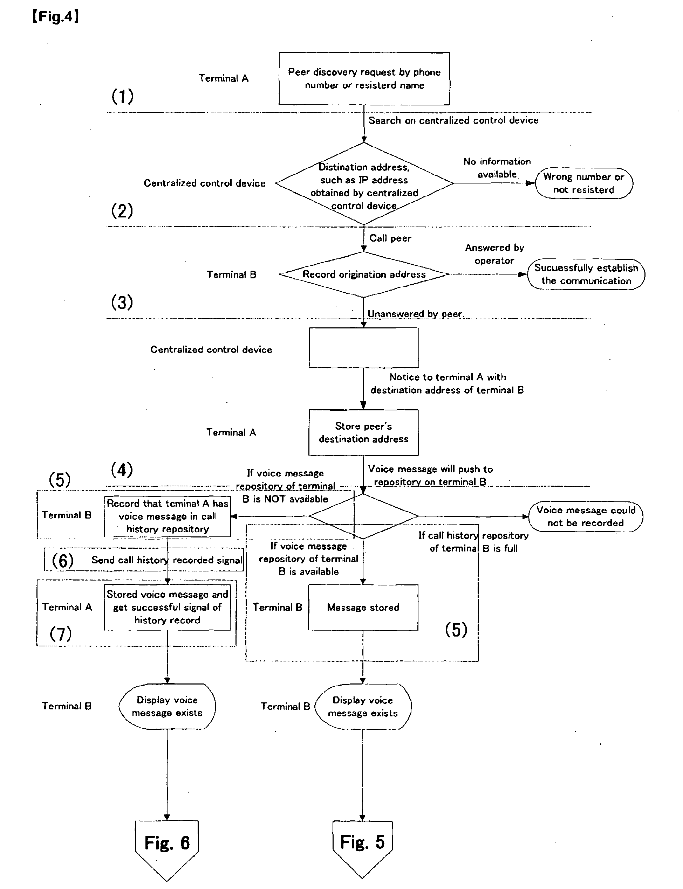

Further details of means 11 to 17 will be better understood in view of an implementation of method according to the invention now described with reference to figures 4 to 6.

A step 1 of peer discovery request is for acquiring a destination address of a receiver peer intended to receive information in a peer to peer network. For example a terminal A which attempts to send information like voice to a terminal B, sends the request to a centralized control device wherein the terminal B is identified by a receiver identifier like a phone number or a registered name. The request contains the receiver identifier and generally an originator identifier of the terminal A that are phone numbers when the request has the form of a phone call to the terminal B. The means 11 of the terminal A are typically programmed for executing step 1.

A step 2 of destination address search is for obtaining the destination address that is for example in the form of an IP address. When the centralized control device receives the request, in the case where no address information associated with the receiver identifier is available, it means that the identifier is a wrong number or a not registered name and in the case where address information is available the centralized control device calls the peer that is here the terminal B. The means 11 of the centralized control device are typically programmed for executing step 2.

A step 3 of origination address recording is for successfully establishing a communication between originator and receiver peers when the receiver peer answers to an origination address associated with the originator identifier and for verifying unanswered in the other case. Typically in the said other case the record of origination address in the terminal B is helpful for a later connection between terminals A and B. The centralized control device is informed of call unanswered by peer that is terminal B. The means 11 and 12 of the terminal B are typically programmed for executing step 3.

A step 4 of notification is for notice to the originator peer of the said other case that is when receiver peer doesn't answer. Here the centralized control device gives notice to terminal A with destination address of terminal B. Terminal A stores peer's destination address. The means 11 and 12 of the terminal A and of the centralized control device are typically programmed for executing step 4.

A step 5 of message storing is for storing a message in one of the peers. If means 13 that is voice message repository of terminal B is available, the message is stored in terminal B. If voice message repository of terminal B is not available, terminal B records that terminal A has voice message in a call history repository that is part of means 15 of terminal B. If call history repository of terminal B is full, voice message cannot be stored in terminals A and B.

A step 6 of informing terminal A is for sending call history recorded signal to terminal A. The means 15 of terminal B are also programmed for executing step 6.

A step 7 of getting successful signal of history record is for storing voice message in terminal A by means 13 of terminal A subsequently to step 6.

At the end of step 5, means 14 of terminal B displays that voice message exists.

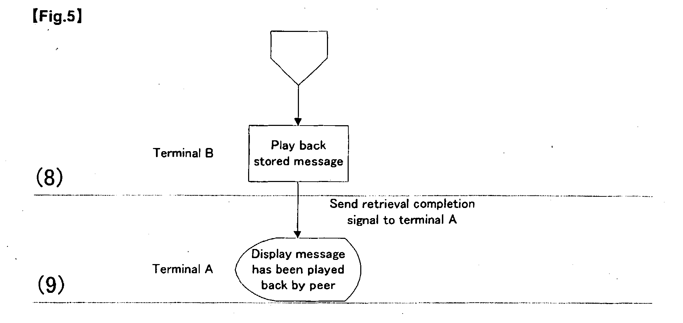

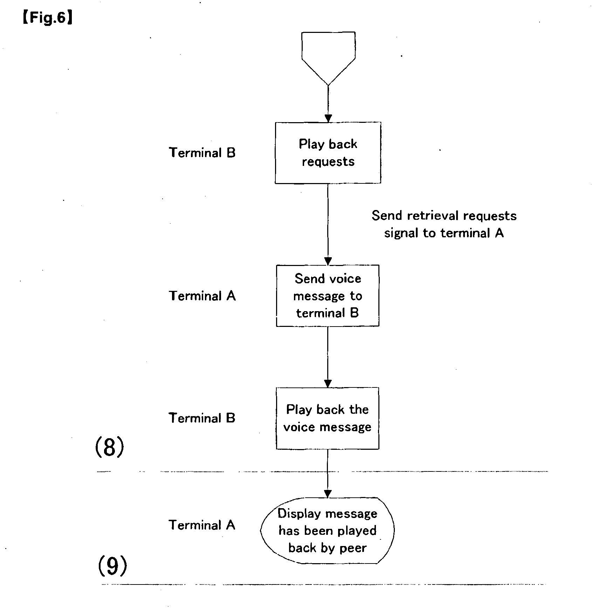

A step 8 of play back is for playing the voice message in terminal B. With reference to figure 5, step 8 being executed after message has been stored in terminal B by step 5, the stored message can be immediately played. With reference to figure 6, step 8 being executed after step 7, terminal B sends first a retrieval requests signal to terminal A that consequently sends voice message to terminal B.

A step 9 of acknowledgement is for displaying on means 17 of terminal A that message has been played back by peer.

## Claims

1. A communication terminal comprising:
- a communication partner detecting means (11) for detecting a communication partner terminal to be connected with said communication terminal,
- a communication track record means (12) for storing information of said communication partner terminal connection identification,
- an information repository means (13) for storing a voice message originating from said communication partner terminal,
- a recorded information indicating means (14) for displaying a presence of the stored voice message,
- an information retrieval means (15) for retrieving the stored voice message, **characterized by**
- a retrieval completion signal transmission means (16) for transmitting a signal to said communication partner terminal based on the connection identification of said communication partner terminal stored in said communication track record means, said signal being indicative of the retrieval of said stored voice message by said communication terminal.

2. A telecommunication network comprising a communication terminal as claimed in claim 1.

3. A peer to peer telecommunication network according to claim 2 wherein said communication terminal is a receiver peer and said communication partner terminal is an originator peer, the communication between the originator peer and the receiver peer occurring without order from an arbitrer.

4. A voice mail method to be used in a communication terminal, said method comprising:
- a step of detecting a communication partner terminal to be connected with said communication terminal,
- a step of storing information of said communication partner terminal connection identification,
- a step of storing a voice message originating from said communication partner terminal,
- a step of displaying a presence of the stored voice message,
- a step of retrieving the stored voice message, and **characterised by**
- a step of transmitting a signal to said communication partner terminal based on the connection identification of said communication partner terminal stored in said communication track record means, said signal being indicative of the retrieval of said stored voice message by said communication terminal.

## Patentansprüche

1. Kommunikationsendgerät, umfassend:
- ein Kommunikationspartner-Detektionsmittel (11) zum Detektieren eines mit dem Kommunikationsendgerät zu verbindenden Kommunikationspartnerendgeräts,
- ein Kommunikations-Vortätigkeitsmittel (12) zum Speichern von Informationen der Kommunikationspartnerendgerät-Verbindungsidentifikation,
- ein Informationsarchivmittel (13) zum Speichern einer aus dem Kommunikationspartnerendgerät stammenden Sprachnachricht,
- ein Anzeigemittel (14) für aufgezeichnete Informationen zum Anzeigen einer Anwesenheit der gespeicherten Sprachnachricht,
- ein Informationsabrufmittel (15) zum Abrufen der gespeicherten Sprachnachricht,
**gekennzeichnet durch**
ein Abrufabschlusssignal-Übertragungsmittel (16) zum Senden eines Signals zu dem Kommunikationspartnerendgerät auf der Basis der in dem Kommunikations-Vortätigkeitsmittel gespeicherten Verbindungsidentifikation des Kommunikationspartnerendgeräts, wobei das Signal den Abruf der gespeicherten Sprachnachricht **durch** das Kommunikationsendgerät anzeigt.

2. Telekommunikationsnetz, das ein Kommunikationsendgerät nach Anspruch 1 umfasst.

3. Peer-to-Peer-Telekommunikationsnetz nach Anspruch 2, wobei das Kommunikationsendgerät ein Empfänger-Peer und das Kommunikationspartnerendgerät ein Urheber-Peer ist, wobei die Kommunikation zwischen dem Urheber-Peer und dem Empfänger-Peer ohne Anordnung aus einem Arbitrierer stattfindet.

4. Voice-Mail-Verfahren zur Verwendung in einem Kommunikationsendgerät, mit den folgenden Schritten:
- Detektieren eines mit dem Kommunikationsendgerät zu verbindenden Kommunikationspartnerendgeräts,
- Speichern von Informationen der Kommunikationspartnerendgerät-Verbindungsidentifikation,
- Speichern einer aus dem Kommunikationspartnerendgerät stammenden Sprachnachricht,
- Anzeigen einer Anwesenheit der gespeicherten Sprachnachricht,
- Abrufen der gespeicherten Sprachnachricht und
**gekennzeichnet durch**
- Senden eines Signals zu dem Kommunikationspartnerendgerät auf der Basis der in dem Kommunikations-Vortätigkeitsmittel gespeicherten Verbindungsidentifikation des Kommunikationspartnerendgeräts, wobei das Signal den Abruf der gespeicherten Sprachnachricht **durch** das Kommunikationsendgerät anzeigt.

## Revendications

1. Terminal de communication comprenant :
- un moyen de détection (11) d'un associé de communication permettant de détecter un terminal associé à la communication à relier au dit terminal de communication,
- un moyen d'enregistrement (12) de suivi de communication permettant de stocker les informations concernant ladite identification de connexion du terminal associé de communication,
- un moyen de référentiel d'informations (13) permettant de stocker un message vocal provenant dudit terminal associé de communication,
- un moyen d'indication d'informations enregistrées (14) permettant d'afficher la présence du message vocal stocké,
- un moyen de récupération des informations (15) permettant de récupérer le message vocal stocké,
**caractérisé en ce que**
- un moyen de transmission de signal d'achèvement de récupération (16) permette d'émettre un signal vers ledit terminal associé de communication sur la base de l'identification de connexion dudit terminal associé de communication, laquelle est stockée dans ledit moyen d'enregistrement de suivi de communication, ledit signal étant indicatif de la récupération dudit message vocal stocké par ledit terminal de communication.

2. Réseau de télécommunications comprenant un terminal de communication tel que revendiqué dans la revendication 1.

3. Réseau de télécommunications de poste à poste selon la revendication 2, dans lequel ledit terminal de communication est un poste de réception et ledit terminal associé de communication est un poste d'envoi, la communication entre le poste d'envoi et le poste de réception se produisant sans instruction provenant d'un arbitre.

4. Procédé de messagerie vocale à utiliser dans un terminal de communication, ledit procédé comprenant :
- une étape consistant à détecter un terminal associé de communication à relier au dit terminal de communication,
- une étape consistant à stocker des informations concernant ladite identification de la connexion du terminal associé de communication,
- une étape consistant à stocker un message vocal provenant dudit terminal associé de communication,
- une étape consistant à afficher la présence du message vocal stocké,
- une étape consistant à récupérer le message vocal stocké, et **caractérisée par**
- une étape consistant à transmettre un signal vers ledit terminal associé de communication sur la base de l'identification de connexion dudit terminal associé de communication, laquelle est stockée dans ledit moyen d'enregistrement de suivi de communication, ledit signal étant indicatif de la récupération dudit message vocal stocké par ledit terminal de communication.
